# EUROPÄISCHE PATENTSCHRIFT

(11) **EP 3 067 182 B1**
(45) Veröffentlichungstag und Bekanntmachung des Hinweises auf die Patenterteilung: **19.09.2018**
(21) Anmeldenummer: 16154101.6
(22) Anmeldetag: 03.02.2016
(51) Int. Cl.: B29C 51/28, B29C 33/02, B29C 70/44, B29C 33/30

(54) **MINI-AUTOKLAV-VORRICHTUNG ZUR HERSTELLUNG VON KUNSTSTOFF-VERBUNDWERKSTOFFEN**
MINI-AUTOCLAVE DEVICE FOR THE PREPARATION OF PLASTIC COMPOSITE MATERIALS
DISPOSITIF AUTOCLAVE MINIATURE DESTINÉ À FABRIQUER DES MATIÈRES COMPOSITES EN PLASTIQUE

(30) Priorität: 09.03.2015 DE 102015103369
(43) Veröffentlichungstag der Anmeldung: 14.09.2016
(73) Patentinhaber: Piekenbrink Composite GmbH, 88471 Laupheim (DE)
(72) Erfinder: Piekenbrink, Olaf, 88471 Laupheim (DE); Piekenbrink, Björn, 88471 Laupheim (DE)
(74) Vertreter: Kiessling, Christian

(56) Entgegenhaltungen:
- DE-U1- 20 116 817
- US-A- 5 824 249

## Beschreibung

Die Erfindung betrifft eine Vorrichtung zum Verpressen von Kunststoff-Verbundwerkstoffen zur Herstellung von Formteilen, mit einem mittels eines Deckels verschließbaren Hohlraum eines Hohlkörpers, wobei eine Innenfläche des Deckels mit einem Profil versehen ist, das als Lager für eine Außenfläche eines Formteils vorgesehen ist, dessen Außenkontur an die Kontur des Profils des Deckels angepasst ist, und ein zwischen Hohlraum und Deckel befindliches Diaphragma dazu ausgebildet ist, an die Innenfläche des Formteils anzugrenzen.

Zur Herstellung von Formteilen aus Kunststoff-Verbundwerkstoffen sind im Stand der Technik als Autoklav-Vorrichtungen bezeichnete massivwandige Druckbehälter bekannt, in die für einen Verpressungsvorgang jeweils eine Mehrzahl von Formteilen einbringbar ist. Bei einem Verpressungsvorgang werden die Formteile unter einem Druck von in der Regel mehreren Atmosphären gegen einen Formkörper gepresst und nehmen so ihre gewünschte Struktur und endgültige Formgebung an.

Die bekannten Autoklav-Vorrichtungen weisen indes den Nachteil auf, dass ihr Betrieb aufgrund ihres im Vergleich zu den Abmessungen der herzustellenden Formteile sehr großen Innenvolumens sehr energieaufwendig und damit mit hohen Kosten verbunden ist.

Die Druckschrift DE 201 16 817 U1 offenbart eine Vorrichtung zur Herstellung von faserverstärkten Kunststoffbauteilen mit einer dünnwandigen Wandstärke im Bereich von 0,2 mm bis 200 mm, mit:
- einer matrizenartigen Formunterseite;
- einer flüssigkeits- und/oder gasdichte, flexible und elastische oder plastische, transparente oder nicht transparente Abdeckung, welche zumindest oberhalb des formgebenden Abschnittes der Formunterseite vollständig oder abschnittsweise trennfähig an dieser oder an einem Spannrahmen oder an einer Druckglocke vorgesehen ist, wobei diese Abdeckung außerhalb des Randbereichs des formgebenden Abschnittes der Formunterseite mit der Formunterseite und/oder mit einem Spannrahmen und/oder mit einer Druckglocke flüssigkeitsdicht und/oder gasdicht in Verbindung steht oder flüssigkeitsdicht und/oder gasdicht in Verbindung bringbar ist;
- einer Verstärkungsfaserschicht, welche zumindest zwischen dem formgebenden Abschnitt der Formunterseite und der hierzu korrespondierenden Abdeckung flächendeckend oder abschnittsweise vorgesehen ist;
- einer Druckglocke, welche unter Überdruck mit einem flüssigen und/oder gasförmigen Medium beaufschlagbar die Abdeckung zumindest in dem formgebenden Abschnitt der Formunterseite und gegebenenfalls in den randwärts daran anschließenden Randbereichen mittelbar oder unmittelbar überragt, wobei die Druckglocke mit der dortigen Abdeckung mittelbar oder unmittelbar flüssigkeitsdicht und/oder gasdicht in Verbindung steht oder bringbar ist, um überflüssiges Reaktionsharz aus der Verstärkungsfaserschicht auszupressen; sowie
- einem oder mehrerer Harzüberlaufkanäle in dem von der Abdeckung dicht überragten randwärtigen Bereich der Formunterseite für das Auffangen von durch die druckbeaufschlagte Abdeckung aus der Verstärkungsfaserschicht herausgepresstem Reaktionsharz und/oder ein oder mehrere gegebenenfalls stutzenartige sowie abdeckungsseitige und/oder formseitige Mittel zur Absaugung von durch die druckbeaufschlagte Abdeckung aus der Verstärkungsfaserschicht herausgepresstem Reaktionsharz und/oder zur Anlegung von Unterdruck.

Diese bekannte Vorrichtung hat zum Ziel die Bereitstellung dünnwandiger Kunststoffbauteile mit einem hohen Verstärkungsfaser-Volumenanteil, die auf besonders schnelle, einfache und kostengünstige Art und Weise eine Erhöhung des Verstärkungsfaser-Volumenanteils sowie eine Verringerung der Wandstärke und damit auch des Gewichtes von Faserverbund-Bauteilen erlaubt, welche den Einsatz kostengünstiger Materialien gestattet, insbesondere von trockenen, nicht arbeits- und zeitintensiv vorzutränkenden Verstärkungsfasern, welche die Herstellung von Kunststoffbauteilen mit einer porenfreien Oberfläche ermöglicht, wobei deren Energieverbrauch, Betriebskosten, Anschaffungs- und Herstellungskosten besonders niedrig sein sollen.

Des Weiteren ist aus der Druckschrift US 5 824 249 eine weitere Vorrichtung bekannt, bei der ein aushärtbares Formteil zwischen zwei sich gegenüberstehenden Pressteilen platziert ist. Der Gebrauch einer Druckkammer ist dabei indes nicht vorgesehen.

Aufgabe der Erfindung ist es, eine Vorrichtung zum Verpressen von Kunststoff-Verbundwerkstoffen zur Herstellung von Formteilen zu schaffen, deren Betrieb insbesondere bei der Herstellung kleiner Stückzahlen gegenüber den bekannten Vorrichtungen deutlich kostengünstiger ist.

Diese Aufgabe wird erfindungsgemäß durch eine Vorrichtung gemäß Anspruch 1 gelöst.

Bevorzugte Ausführungsformen der Erfindung sind Gegenstand der Unteransprüche.

Bei der erfindungsgemäßen Vorrichtung wird durch die Merkmalskombination des kennzeichnenden Teils des Patentanspruchs 1 in Verbindung mit den Merkmalen seines Oberbegriffes die Möglichkeit eines Pressens von Kunststoff-Verbundwerkstoffen unter Druck von mehreren Atmosphären direkt gegen das Profil des Deckels als den formgebenden Formkörper in dem Hohlraum des Hohlkörpers geschaffen.

Das unter einen entsprechenden Druck zu setzende Volumen des Hohlraums des Hohlkörpers ist dabei um mehrere Größenordnungen geringer als das Innenvolumen einer herkömmlichen Autoklav-Vorrichtung, und dementsprechend ist der Energieaufwand zur Aufbringung des Druckes geringer, der für die Erzeugung der gewünschten Struktur und endgültigen Formgebung eines Formstückes notwendig ist.

Die erfindungsgemäße Vorrichtung ist dabei insbesondere für eine Herstellung kleinerer Stückzahlen von Vorteil.

Gemäß einer ersten bevorzugten Ausführungsform der erfindungsgemäßen Vorrichtung ist kann das die konkav/konvexe Kontur aufweisende Profil einstückig mit dem Deckel ausgebildet sein, oder alternativ als ein mit dem Deckel lösbar fest verbindbares Bauteil ausgebildet sein, so dass eine Mehrzahl unterschiedlicher Profile an einem Deckel anbringbar ist, so dass die Verwendung einer Mehrzahl unterschiedlicher Profile am gleichen Deckel ermöglicht ist.

Des Weiteren alternativ kann das Profil als in das Material des Deckels eingebrachte, den Deckel höhlende konkav/konvexe Kontur ausgebildet sein.

Die Außenkontur des Formteils entspricht vorzugsweise direkt der Kontur des Profils des Deckels. Indes sind auch Ausführungsformen denkbar, bei denen das Profil aus einer Mehrzahl aneinander angepasster, sich zu potentiell unterschiedlichen Gesamtprofilen ergänzender Einzelelemente zusammengesetzt ist.

Der Hohlkörper und der Deckel sind vorzugsweise jeweils aus einem massiven integralen Block hergestellt. Indes kann insbesondere der Hohlkörper aus einer Mehrzahl massiver Blöcke hergestellt sein, wobei sich die Konturen der Innenflächen der einzelnen Blöcke dann zu der Kontur der Innenfläche des Hohlraums des Hohlkörpers ergänzen.

Bei einer Herstellung aus einer Mehrzahl von massiven Blöcken ist der Hohlkörper vorzugsweise aber nicht notwendigerweise aus drei zu einer kompakten Einheit zusammenfügbaren massiven Blöcken zusammengesetzt, wobei eine obere Grenzfläche eines den Deckel nicht kontaktierenden dritten Blocks an die jeweils unteren Grenzflächen von zwei sich seitlich jeweils kontaktierenden Blöcken angrenzt, deren jeweilige dem dritten Block ferne obere Grenzflächen dem Deckel gegenüberstehen.

Im Falle einer Herstellung eines Hohlkörpers aus insgesamt drei Blöcken können zwei sich seitlich jeweils kontaktierende Blöcke mit jeweils planer Außenkontur vorgesehen sein, um einen Hohlkörper mit quaderförmiger Außenkontur zu bilden. Alternativ können zwei sich jeweils seitlich kontaktierende Blöcke mit jeweils gebogener Außenkontur vorgesehen sein, um einen Hohlkörper mit zylinderförmiger Außenkontur zu bilden.

Ein jeder Block ist aus einem druckresistenten festen Material, insbesondere einem Metall wie vorzugsweise Stahl oder Aluminium oder auch Chrom hergestellt.

Gemäß einer weiteren bevorzugten Ausführungsform der erfindungsgemäßen Vorrichtung weist der Hohlkörper eine die Hohlraum von einer Außenfläche des Blocks trennende, an den Deckel angrenzende Dichtungszone auf, deren Breite bemessen ist, um eine gasdichte Schnittstelle zwischen dem Hohlkörper und dem Deckel zu bilden. Die Dichtungszone kann dabei im Wesentlichen plan oder zum Zweck einer Oberflächenvergrößerung gebogen ausgebildet sein, wobei im Bereich der Dichtungszone vorzugsweise eine als Aussparung des Hohlkörpers ausgebildete Umlaufnut vorgesehen ist.

Eine eigenständige oder zusätzliche Umlaufnut kann auch im Bereich des Hohlraumes des Hohlkörpers als Aussparung in dem Material des Hohlkörpers vorgesehen sein.

Ein Diaphragma ist vorzugsweise ausgebildet, um sich über die insgesamte Breite der Dichtungszone zu erstrecken. Bei Ausführungsformen des Hohlkörpers, bei denen im Bereich der Dichtungszone eine als Aussparung des Hohlkörpers ausgebildete Umlaufnut vorgesehen ist, ist das Diaphragma vorzugsweise mit einem Umlaufkeil versehen, der dimensioniert ist, um die Umlaufnut schlüssig auszufüllen. Das Diaphragma und auch die Umlaufnut sind vorzugsweise aus einem elastischen Kunststoffmaterial hergestellt.

Gemäß einer weiteren bevorzugten Ausführungsform der erfindungsgemäßen Vorrichtung enthält der Hohlkörper eine die Hohlraum von der Außenfläche des Blocks trennende Wandung, deren Dicke mindestens der Breite der Dichtungszone entspricht.

Ein Diaphragma erstreckt sich gemäß einer ersten bevorzugten Ausführungsform der Erfindung im Querschnitt von einem ersten Punkt der Außenwand des Blocks oberhalb der Dichtungszone über die Hohlraum bis zu einem dem ersten Punkt gegenüberliegenden zweiten Punkt der Außenwand des Blockes.

Gemäß einer zweiten bevorzugten Ausführungsform bildet ein Diaphragma unter teilweiser Angrenzung an das Formteil und teilweiser Angrenzung an eine Innenfläche des Deckels eine in sich geschlossene Einheit.

Gemäß einer wichtigen bevorzugten Ausführungsform der erfindungsgemäßen Vorrichtung ist im Bereich des Deckels eine Ventileinrichtung für einen bidirektionalen Gas-Transfer zwischen einer ambienten Gasquelle und dem Inneren der Hohlraum des Hohlkörpers vorgesehen.

Weiterhin sind in der erfindungsgemäßen Vorrichtung zwei Heizeinrichtungen vorgesehen, wobei eine erste Heizeinrichtung an eine insgesamte Oberfläche des Deckels angrenzend platziert ist und eine zweite Heizeinrichtung an eine insgesamte Unterfläche des Hohlkörpers angrenzend platziert ist.

Des Weiteren kann vorzugsweise eine Mehrzahl von weiteren Heizeinrichtungen vorgesehen sein, wobei mindestens eine erste Heizeinrichtung im Material des Hohlkörpers untergebracht ist und mindestens eine zweite Heizeinrichtung in dem Hohlraum des Hohlkörpers untergebracht ist.

Weiterhin sind in der erfindungsgemäßen Vorrichtung zwei Kühleinrichtungen vorgesehen, wobei eine erste Kühleinrichtung an eine insgesamte erste Seitenfläche des Hohlkörpers angrenzend platziert ist und eine zweite Kühleinrichtung an eine insgesamte zweite Seitenfläche des Hohlkörpers angrenzend platziert ist. Eine derartige Platzierung von Kühleinrichtungen ermöglicht vorteilhaft eine Platzierung einer ersten Heizeinrichtung an eine insgesamte Oberfläche des Deckels angrenzend und eine zweite Heizeinrichtung an eine insgesamte Unterfläche des Hohlkörpers angrenzend.

Des Weiteren kann eine Mehrzahl von weiteren Kühleinrichtungen vorgesehen sein, wobei mindestens eine erste Kühleinrichtung in dem Material des Hohlkörpers untergebracht ist und mindestens eine zweite Kühleinrichtung in dem Hohlraum des Hohlkörpers untergebracht ist.

Eine Heizeinrichtung kann beispielsweise als elektrisch isolierte Heizdrähte enthaltender Metallblock ausgebildet sein. Anderseits kann eine Heizeinrichtung auch als von heißer Flüssigkeit durchströmte Hohlleitungen enthaltender Metallblock ausgeführt sein. In beiden Fällen ist eine möglichst große Kontaktfläche zwischen der Heizeinrichtung und einer Außenfläche des Hohlkörpers ausgebildet.

Eine Kühleinrichtung ist vorzugsweise als von kalter Flüssigkeit durchströmter Hohlleitungen aufweisender Metallblock ausgeführt. Auch dabei ist eine möglichst große Kontaktfläche zwischen der Heizeinrichtung und einer Außenfläche des Hohlkörpers vorzusehen.

Die erfindungsgemäße Vorrichtung wird im Folgenden anhand bevorzugter Ausführungsformen erläutert, die in den Figuren der Zeichnung dargestellt sind. Darin zeigen:
- Fig.1: eine erste bevorzugte Ausführungsform der erfindungsgemäßen Vorrichtung in einer Querschnittsansicht;
- Fig.2: eine zweite bevorzugte Ausführungsform der erfindungsgemäßen Vorrichtung in einer Querschnittsansicht.

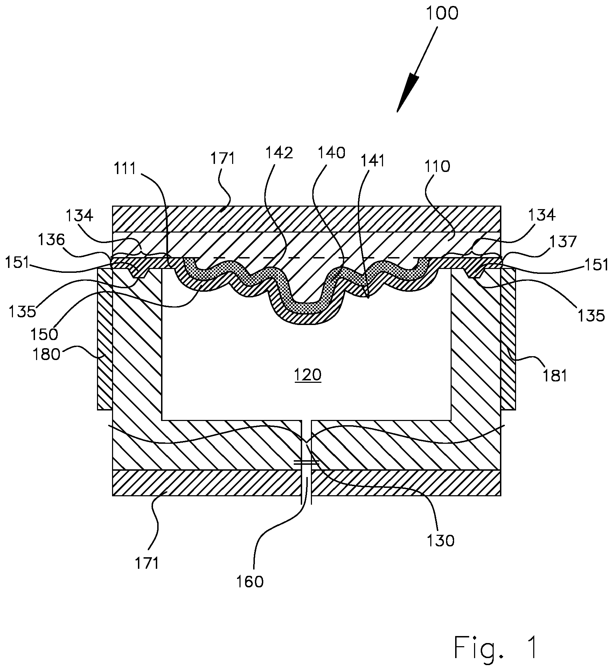

Die in den Figuren 1 bis 2 dargestellte erfindungsgemäße Vorrichtung 100 ist zum Verpressen von Kunststoff-Verbundwerkstoffen zur Herstellung von Formteilen 140 vorgesehen und enthält einen mittels eines Deckels 110 gasdicht verschließbaren, mit Gas befüllbaren Hohlraum 120 eines Hohlkörpers 130.

Eine Innenfläche 111 des Deckels 110 ist mit einem Profil 112 versehen, das als Lager für eine Außenfläche 141 eines Formteils 140 vorgesehen ist, dessen Außenkontur an die Kontur des Profils 112 des Deckels 110 angepasst ist, und ein an eine Innenfläche 142 des Formteils 140 angrenzendes Diaphragma 150 eine Schnittstelle (Übergangszone) zu dem Hohlraum 120 des Hohlkörpers 130 bildet.

Das Profil 112 ist als konkav/konvexe, in den Hohlraum 120 des Hohlkörpers 130 hineinragende Kontur des Deckels 110 ausgebildet, das einstückig mit dem Deckel 110 und insofern aus dem Material des Deckels 110 hergestellt, wobei die Außenkontur des Formteils 140 der Kontur des Profils 112 entspricht.

Der Hohlkörper 130 und der Deckel 110 sind jeweils aus einem massiven integralen Block hergestellt.

Der Hohlkörper 130 weist eine den Hohlraum 120 von einer Außenfläche des Blocks trennende, an den Deckel 110 angrenzende Dichtungszone 134 auf, deren Breite bemessen ist, um eine gasdichte Schnittstelle (Übergangsbereich) zwischen dem Hohlkörper 120 und dem Deckel 110 zu bilden. Die Dichtungszone 134 ist im Wesentlichen plan ausgebildet, weist indes im Bereich der Dichtungszone 134 eine als Aussparung des Hohlkörpers 130 ausgebildete Umlaufnut 135 auf.

Das Diaphragma 150 ist ausgebildet, um sich über die insgesamte Breite der Dichtungszone 134 zu erstrecken, und ist im Bereich der Umlaufnut 135 der Dichtungszone 134 mit einem Umlaufkeil 151 versehen, der dimensioniert ist, um die Umlaufnut 135 schlüssig auszufüllen. Sowohl das Diaphragma 150 als auch der Umlaufkeil 151 sind aus einem elastischen Kunststoffmaterial hergestellt.

Das Diaphragma 150 erstreckt sich somit in der in Figur 1 dargestellten Ausführungsform von einem ersten Punkt 136 der Außenwand des Blocks oberhalb der Dichtungszone 134 über dem Hohlraum 120 bis zu einem dem ersten Punkt 136 gegenüberliegenden zweiten Punkt 137 der Außenwand des Blockes.

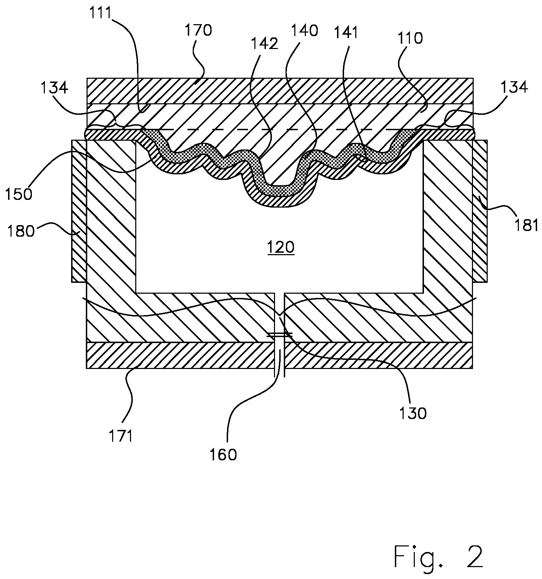

Gemäß der in Figur 2 dargestellten alternativen Ausführungsform bildet das Diaphragma 150 unter teilweiser Angrenzung an das Formteil 140 und teilweiser Angrenzung an eine Innenfläche 111 des Deckels 110 eine in sich geschlossene Einheit.

Im Bereich des Deckels 110 ist eine Ventileinrichtung 160 für einen bidirektionalen Gas-Transfer zwischen einer ambienten Gasquelle und dem Inneren des Hohlraums 120 des Hohlkörpers 130 vorgesehen.

Zwei Heizeinrichtungen 170, 171 sind vorgesehen, wobei eine erste Heizeinrichtung 170 an eine insgesamte Oberfläche des Deckels 110 angrenzend platziert ist und eine zweite Heizeinrichtung 171 an eine insgesamte Unterfläche des Hohlkörpers 130 angrenzend platziert ist.

Des Weiteren sind zwei Kühleinrichtungen 180, 181 vorgesehen, wobei eine erste Kühleinrichtung 180 an eine insgesamte erste Seitenfläche des Hohlkörpers 130 angrenzend platziert ist und eine zweite Kühleinrichtung 181 an eine insgesamte zweite Seitenfläche des Hohlkörpers 130 angrenzend platziert ist.

Eine Heizeinrichtung 170, 171 ist als elektrisch isolierte Heizdrähte enthaltender Metallblock ausgebildet, und eine Kühleinrichtung 180, 181 ist als von kalter Flüssigkeit durchströmte Hohlleitungen aufweisender Metallblock ausgeführt.

## Patentansprüche

1. Vorrichtung (100) zum Verpressen von Kunststoff-Verbundwerkstoffen zur Herstellung von Formteilen (140), mit einem mittels eines Deckels (110) verschließbaren Hohlraum (120) eines Hohlkörpers (130), wobei eine Innenfläche (111) des Deckels (110) mit einem Profil (122) versehen ist, das als Lager für eine Außenfläche (141) eines Formteils (140) vorgesehen ist, dessen Außenkontur an die Kontur des Profils (112) des Deckels (110) anpassbar ist, und ein an eine Innenfläche (142) des Formteils (140) angrenzendes Diaphragma (150) eine Schnittstelle zu dem Hohlraum (120) des Hohlkörpers (130) bilden kann, wobei das Profil (112) als konkav/konvexe, in den an das Diaphragma (150) angrenzenden Hohlraum (120) des Hohlkörpers (130) hineinragende Kontur des Deckels (110) ausgebildet ist, wobei der Hohlraum (120) mit Gas befüllbar und gasdicht verschließbar ist, **dadurch gekennzeichnet, dass** zwei Heizeinrichtungen vorgesehen sind, wobei eine erste Heizeinrichtung an eine insgesamte Oberfläche des Deckels angrenzend platziert ist und eine zweite Heizeinrichtung an eine insgesamte Unterfläche des Hohlkörpers angrenzend platziert ist, und des Weiteren zwei Kühleinrichtungen vorgesehen sind, wobei eine erste Kühleinrichtung an eine insgesamte erste Seitenfläche des Hohlkörpers angrenzend platziert ist und eine zweite Kühleinrichtung an eine insgesamte zweite Seitenfläche des Hohlkörpers angrenzend platziert ist.

2. Vorrichtung nach Anspruch 1, **dadurch gekennzeichnet, dass** das eine konkav/konvexe Kontur aufweisende Profil (112) einstückig mit dem Deckel (110) ausgebildet ist.

3. Vorrichtung nach Anspruch 1, **dadurch gekennzeichnet, dass** das eine konkav/konvexe Kontur aufweisende Profil (112) als ein mit dem Deckel (110) lösbar fest verbindbares Bauteil ausgebildet ist.

4. Vorrichtung nach Anspruch 1, **dadurch gekennzeichnet, dass** das Profil (112) als in das Material des Deckels (110) eingebrachte, den Deckel (110) höhlende konkav/konvexe Kontur ausgebildet ist.

5. Vorrichtung nach einem der vorhergehenden Ansprüche, **dadurch gekennzeichnet, dass** die Außenkontur des Formteils (140) der Kontur des Profils (112) des Deckels (110) des Hohlkörpers (130) entspricht.

6. Vorrichtung nach einem der Ansprüche 1 bis 5, **dadurch gekennzeichnet, dass** der Hohlkörper (130) und der Deckel (110) jeweils aus einem massiven integralen Block hergestellt sind.

7. Vorrichtung nach einem der Ansprüche 1 bis 5, **dadurch gekennzeichnet, dass** der Hohlkörper (130) aus einer Mehrzahl von massiven Blöcken hergestellt ist, wobei sich die Konturen der Innenflächen der einzelnen Blöcke zu der Kontur der Innenfläche des Hohlraums (120) des Hohlkörpers (130) ergänzen.

8. Vorrichtung nach einem der vorhergehenden Ansprüche, **dadurch gekennzeichnet, dass** der Hohlkörper (130) eine den Hohlraum (120) von einer Außenfläche des Blocks trennende, an den Deckel (110) angrenzende Dichtungszone (134) aufweist, deren Breite bemessen ist, um eine gasdichte Schnittstelle zwischen dem Hohlkörper (130) und dem Deckel (110) zu bilden.

9. Vorrichtung nach Anspruch 8, **dadurch gekennzeichnet, dass** die Dichtungszone (134) im Wesentlichen plan ausgebildet ist.

10. Vorrichtung nach Anspruch 8, **dadurch gekennzeichnet, dass** die Dichtungszone (134) zum Zweck einer Oberflächenvergrößerung gebogen ausgebildet ist.

11. Vorrichtung nach Ansprüche 8 bis 10, **dadurch gekennzeichnet, dass** im Bereich der Dichtungszone (134) eine als Aussparung des Hohlkörpers (130) ausgebildete Umlaufnut (135) vorgesehen ist.

12. Vorrichtung nach Ansprüche 8 bis 10, **dadurch gekennzeichnet, dass** im Bereich des Hohlraumes (120) eine als Aussparung des Hohlkörpers (130) ausgebildete Umlaufnut vorgesehen (135) ist.

13. Vorrichtung nach Ansprüche 8 bis 12, **dadurch gekennzeichnet, dass** das Diaphragma (150) ausgebildet ist, um sich über die insgesamte Breite der Dichtungszone (134) zu erstrecken.

14. Vorrichtung nach den Ansprüchen 11 und 13, **dadurch gekennzeichnet, dass** das Diaphragma (150) mit einem Umlaufkeil (151) versehen ist, der dimensioniert ist, um die Umlaufnut (135) schlüssig auszufüllen.

15. Vorrichtung nach einem der Ansprüche 9 bis 14, **dadurch gekennzeichnet, dass** der Hohlkörper (130) eine den Hohlraum (120) von der Außenfläche des Blocks trennende Wandung enthält, deren Dicke mindestens der Breite der Dichtungszone (134) entspricht.

## Claims

1. Apparatus (100) for pressing plastic composite materials for producing shaped parts (140), having a cavity (120) of a hollow body (130), which cavity (120) can be closed by means of a cover (110), an inner face (111) of the cover (110) being provided with a profile (122) which is provided as a bearing for an outer face (141) of a shaped part (140), the outer contour of which can be adapted to the contour of the profile (112) of the cover (110), and it being possible for a diaphragm (150) which adjoins an inner face (142) of the shaped part (140) to form an interface with the cavity (120) of the hollow body (130), the profile (112) being configured as a concave/convex contour of the cover (110), which contour protrudes into that cavity (120) of the hollow body (130) which adjoins the diaphragm (150), it being possible for the cavity (120) to be filled with gas and to be closed in a gas-tight manner, **characterized in that** two heating devices are provided, a first heating device being positioned so as to adjoin an entire upper face of the cover, and a second heating device being positioned so as to adjoin an entire lower face of the hollow body, and, furthermore, two cooling devices being provided, a first cooling device being positioned so as to adjoin an entire first side face of the hollow body, and a second cooling device being positioned so as to adjoin an entire second side face of the hollow body.

2. Apparatus according to Claim 1, **characterized in that** the profile (112) which has a concave/convex contour is configured in one piece with the cover (110) .

3. Apparatus according to Claim 1, **characterized in that** the profile (112) which has a concave/convex contour is configured as a component which can be connected fixedly to the cover (110) in a releasable manner.

4. Apparatus according to Claim 1, **characterized in that** the profile (112) is configured as a concave/convex contour which is made in the material of the cover (110) and hollows out the cover (110).

5. Apparatus according to one of the preceding claims, **characterized in that** the outer contour of the shaped part (140) corresponds to the contour of the profile (112) of the cover (110) of the hollow body (130) .

6. Apparatus according to one of Claims 1 to 5, **characterized in that** the hollow body (130) and the cover (110) are produced in each case from a solid integral block.

7. Apparatus according to one of Claims 1 to 5, **characterized in that** the hollow body (130) is produced from a plurality of solid blocks, the contours of the inner faces of the individual blocks augmenting one another to form the contour of the inner face of the cavity (120) of the hollow body (130).

8. Apparatus according to one of the preceding claims, **characterized in that** the hollow body (130) has a seal zone (134) which adjoins the cover (110), separates the cavity (120) from an outer face of the block, and the width of which is dimensioned so as to form a gas-tight interface between the hollow body (130) and the cover (110).

9. Apparatus according to Claim 8, **characterized in that** the seal zone (134) is of substantially planar configuration.

10. Apparatus according to Claim 8, **characterized in that** the seal zone (134) is of curved configuration for the purpose of increasing a surface area.

11. Apparatus according to Claims 8 to 10, **characterized in that** a circumferential groove (135) which is configured as a cut-out of the hollow body (130) is provided in the region of the seal zone (134).

12. Apparatus according to Claims 8 to 10, **characterized in that** a circumferential groove (135) which is configured as a cut-out of the hollow body (130) is provided in the region of the cavity (120).

13. Apparatus according to Claims 8 to 12, **characterized in that** the diaphragm (150) is configured so as to extend over the entire width of the seal zone (134) .

14. Apparatus according to Claims 18 and 13, **characterized in that** the diaphragm (150) is provided with a circumferential wedge (151) which is dimensioned so as to fill the circumferential groove (135) in a coherent manner.

15. Apparatus according to one of Claims 9 to 14, **characterized in that** the hollow body (130) comprises a wall which separates the cavity (120) from the outer face of the block, and the thickness of which corresponds at least to the width of the seal zone (134) .

## Revendications

1. Dispositif (100) d'assemblage par compression de matériaux composites en matière plastique pour la fabrication de pièces moulées (140), comprenant une cavité (120) d'un corps creux (130) pouvant être fermée au moyen d'un couvercle (110), cependant qu'une face intérieure (111) du couvercle (110) est pourvue d'un profil (122) prévu en tant que logement pour une face extérieure (141) d'une pièce moulée (140) dont le contour extérieur peut être adapté au contour du profil (112) du couvercle (110), et qu'un diaphragme (150), adjacent à une face intérieure (142) de la pièce moulée (140), peut constituer une interface vers la cavité (120) du corps creux (130), cependant que le profil (112) est réalisé sous forme de contour concave/convexe du couvercle (110) faisant saillie dans la cavité (120) du corps creux (130) adjacente au diaphragme (150), cependant que la cavité (120) peut être remplie de gaz et fermée de manière étanche aux gaz, **caractérisé en ce que** deux équipements de chauffage sont prévus, cependant qu'un premier équipement de chauffage est placé de manière adjacente à une face supérieure globale du couvercle et qu'un deuxième équipement de chauffage est placé de manière adjacente à une face inférieure globale du corps creux, et que, en outre, deux équipements de chauffage sont prévus, cependant qu'un premier équipement de chauffage est placé de manière adjacente à une première face latérale globale du corps creux et qu'un deuxième équipement de chauffage est placé de manière adjacente à une deuxième face latérale globale du corps creux.

2. Dispositif selon la revendication 1, **caractérisé en ce que** le profil (112) présentant un contour concave/convexe est réalisé en un seul tenant avec le couvercle (110).

3. Dispositif selon la revendication 1, **caractérisé en ce que** le profil (112) présentant un contour concave/convexe est réalisé sous forme d'un composant pouvant être fixé au couvercle (110) de manière amovible.

4. Dispositif selon la revendication 1, **caractérisé en ce que** le profil (112) est réalisé sous forme de contour concave/convexe ménagé dans le matériau couvercle (110) et creusant le couvercle (110).

5. Dispositif selon une des revendications précédentes, **caractérisé en ce que** le contour extérieur de la pièce moulée (140) correspond au contour du profil (112) du couvercle (110) du corps creux (130).

6. Dispositif selon une des revendications de 1 à 5, **caractérisé en ce que** le corps creux (130) et le couvercle (110) sont respectivement fabriqués à partir d'un bloc massif intégral.

7. Dispositif selon une des revendications de 1 à 5, **caractérisé en ce que** le corps creux (130) est fabriqué à partir d'une pluralité de blocs massifs, cependant que les contours des faces intérieures des différents blocs se complètent de manière à former le contour de la face intérieure de la cavité (120) du corps creux (130).

8. Dispositif selon une des revendications précédentes, **caractérisé en ce que** le corps creux (130) comporte une zone d'étanchéité (134) qui sépare la cavité (120) d'une face extérieure du bloc et est juxtaposée au couvercle (110), et dont la largeur est dimensionnée de manière à constituer une interface étanche aux gaz entre le corps creux (130) et le couvercle (110).

9. Dispositif selon la revendication 8, **caractérisé en ce que** la zone d'étanchéité (134) est réalisée sous forme essentiellement plane.

10. Dispositif selon la revendication 8, **caractérisé en ce que** la zone d'étanchéité (134) est réalisée sous forme incurvée aux fins d'un accroissement de surface.

11. Dispositif selon une des revendications de 8 à 10, **caractérisé en ce que**, dans la région de la zone d'étanchéité (134), une rainure circonférentielle (135) réalisée sous forme d'évidement du corps creux (130) est prévue.

12. Dispositif selon une des revendications de 8 à 10, **caractérisé en ce que**, dans la région de la cavité (120), une rainure circonférentielle (135) réalisée sous forme d'évidement du corps creux (130) est prévue.

13. Dispositif selon une des revendications de 8 à 12, **caractérisé en ce que** le diaphragme (150) est conçu pour s'étendre sur la largeur globale de la zone d'étanchéité (134).

14. Dispositif selon une des revendications 11 et 13, **caractérisé en ce que** le diaphragme (150) est pourvu d'une clavette circonférentielle (151) dimensionnée de manière à emplir par liaison la rainure circonférentielle (135).

15. Dispositif selon une des revendications de 9 à 14, **caractérisé en ce que** le corps creux (130) comporte une paroi qui sépare la cavité (120) de la face extérieure du bloc et dont l'épaisseur correspond au moins à la largeur de la zone d'étanchéité (134).
